# EUROPEAN PATENT SPECIFICATION

(11) **EP 4 523 834 B1**
(45) Date of publication and mention of the grant of the patent: **10.06.2026**
(21) Application number: 24192694.8
(22) Date of filing: 02.08.2024
(51) Int. Cl.: B23K 26/03, B23K 26/146, B23K 26/362, B23K 26/382, B23K 26/402, B23K 103/16, B23K 103/00

(54) **LASER MICROJET DEVICE AND METHOD WITH IN-LINE CAMERAS**
LASERMIKROSTRAHL VORRICHTUNG UND VERFAHREN MIT IN-LINE-KAMERAS
DISPOSITIF AND MÉTHODE POUR MICROJET LASER AVEC CAMÉRAS EN LIGNE

(30) Priority: 03.08.2023 US 202318229803
(43) Date of publication of application: 19.03.2025
(73) Proprietor: RTX Corporation, Farmington, CT 06032 (US)
(72) Inventor: ABDI, Ahmed Abdillahi, San Diego, 92111 (US); LAZUR, Andrew Joseph, La Jolla, 92037 (US)
(74) Representative: Dehns

(56) References cited:
- DE-A1- 102016 007 586
- DE-A1- 19 852 302
- US-A1- 2017 361 399
- US-A1- 2018 161 928

## Description

The present invention relates to ceramic matrix composites (CMCs), and more particularly, to means of machining CMCs, by providing a device for and a method of forming a feature in a workpiece, see claims 1 and 6 respectively.

CMCs are extremely hard and brittle and can therefore be hard to machine efficiently. Waterjet guided laser (i.e., laser microjet) technology is considered a promising manufacturing route for producing complex 3D holes in CMC parts. This technology works by transmitting a laser through a high-pressure water column to the surface of the part. Locating the waterjet nozzle to the part or fixture is accomplished by use of a retractable touch probe, off-set camera, or the water column itself. However, with particularly small holes and/or features, alignment via the touch probe and/or camera can be difficult due to physical interference between parts, especially those with nonplanar surfaces, and the nozzle head assembly. Thus, alternative means of alignment are desirable.

US 2018/161928 A1 (describing the preamble of claims 1 and 6) shows a prior art method and system for confined laser cutting.

### SUMMARY

According to a first aspect of the invention, there is provided a device for forming a feature in a workpiece according to claim 1.

According to another aspect of the invention, there is provided a method of forming a feature in a workpiece according to claim 6.

Features of embodiments of the invention are set forth in the dependent claims.

### BRIEF DESCRIPTION OF THE DRAWINGS

FIG. 1 is a simplified illustration of a waterjet guided laser device.
FIG. 2 is a simplified close-up view of a head assembly of the waterjet guided laser device.
FIG. 3 is a simplified bottom plan view of a camera system of the waterjet guided laser device.

While the above-identified figures set forth one or more embodiments of the present invention, other embodiments are also contemplated, as long they fall within the scope of the present invention as defined in the appended claims, and noted in the discussion. In all cases, this presents the invention by way of representation and not limitation. It should be understood that numerous other modifications and embodiments can be devised by those skilled in the art, which fall within the scope of the present invention as defined in the appended claims.

The figures may not be drawn to scale, and applications and embodiments of the present invention may include features and components not specifically shown in the drawings.

### DETAILED DESCRIPTION

This disclosure presents means for aligning a waterjet nozzle aperture with a workpiece using an in-line camera system. The camera system includes multiple cameras disposed about the waterjet nozzle. Such a system can generate a composite image surrounding the nozzle to help center the nozzle aperture, and thereby the water column, over a feature of the workpiece surface.

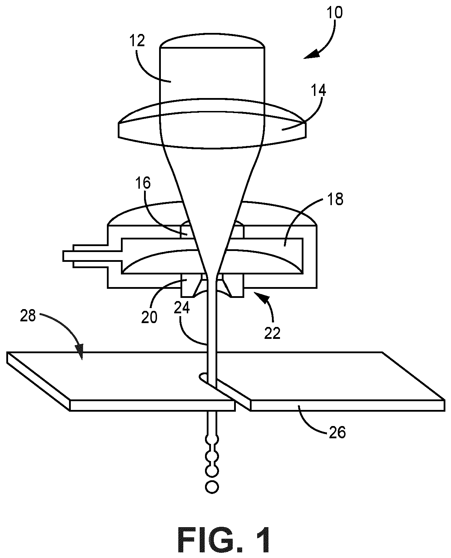

FIG. 1 is a simplified illustration of waterjet guided laser device 10. Device 10 includes laser beam 12 from a laser source, focusing lens 14, window 16, pressurized water chamber 18, and nozzle 20. Nozzle 20 is disposed within head assembly 22. In operation, laser beam 12 is focused by focusing lens 14 and window 16 as it reaches pressurized water chamber 18, which is filled with pressurized water. Cylindrical waterjet (i.e., water column) 24 with internally reflected laser beam 12 is ejected from nozzle 20 and impinges upon workpiece 26 causing removal of workpiece material along a predetermined tool path. Workpiece 26 can be a CMC part, such as an airfoil, platform, blade outer air seal (BOAS), etc., having one or a combination of planar and curved outer surfaces 28. Device 10 can be translatable along multiple axes with respect to workpiece 26. Workpiece 26 can be mounted on a rotatable or otherwise translatable base (not shown) to facilitate access to and alignment of outer surfaces 28.

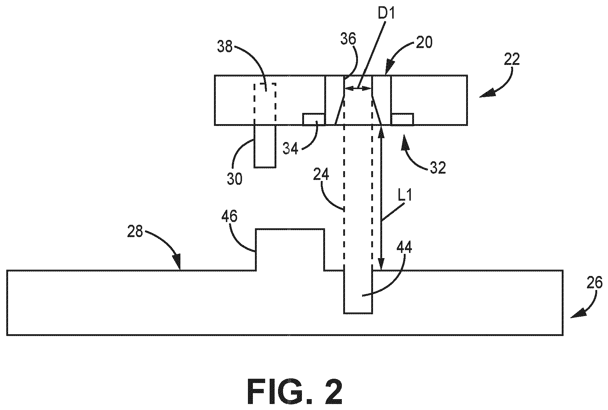

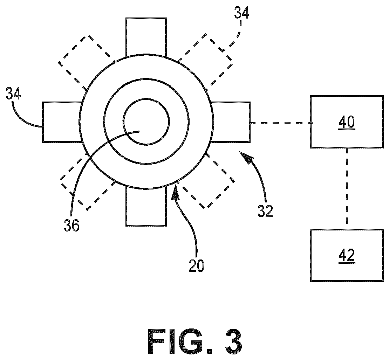

FIG. 2 is a simplified close-up view of head assembly 22, including touch probe 30 and camera system 32. FIG. 3 is a simplified bottom plan view of camera system 32, including multiple cameras 34. FIGS. 2 and 3 are discussed together.

Head assembly 22 includes nozzle 20, camera system 32 collocated with nozzle 20, and touch probe 30. Nozzle 20 includes an aperture 36 having an aperture diameter D1. Aperture 36 controls the diameter of ejected cylindrical waterjet 24, represented in FIG. 2 with dashed lines. Diameter D1 can range from 50 microns to 100 microns, and can be 70 microns in an exemplary embodiment. Touch probe 30 can be used to help align head assembly 22 with workpiece 26 for establishing a work coordinate system (WCS) used as a starting point for operation of system 10. Touch probe 30 can additionally and/or alternatively be used to insure the proper stand-off distance from surface 28 of workpiece 26. Touch probe 30 can be retractable and extendable relative to recess 38 within head assembly 22 such that touch probe 30 does not impede the multiaxial translation of head assembly 22 relative to workpiece 26. Touch probe can be offset from nozzle 20 a greater distance than cameras 34, which is discussed in greater detail below.

Camera system 32 includes a a plurality of cameras (34) disposed about the nozzle 20, and more preferably, two to ten cameras 34 disposed about and proximate nozzle 20. In an exemplary embodiment, camera system 32 can include four to eight cameras 34. As shown in FIG. 3, camera system 32 includes four cameras 34 disposed generally equidistant from one another about nozzle 20. Four additional and optional cameras 34 are shown in dashed lines, as an alternative embodiment can include eight cameras 34. Cameras 34 can be generally flush with the lowest (i.e., downstream) surface of nozzle 20 such that each camera 34 can be offset from outer surface 28 a distance, or length L1 (FIG. 2), which is generally equal to the length of the cylindrical waterjet 24 after exiting nozzle 20 until reaching outer surface 28. Length L1 can range from 0.5 in (12.7 mm) to 1.5 in (38.1 mm) and can scale with diameter D1 of aperture 36. For example, in an embodiment with a diameter D1 of 70 microns, length L1 can be 0.75 in (19 mm). In general, length L1 will be the same for each camera 34 within system 32. In an alternative embodiment, each camera 34 can be partially to fully external to head assembly 22 (i.e., being relatively closer to workpiece 26 with respect to nozzle 20) such that L1 is less than the length of cylindrical waterjet 24.

Each camera 34 can be oriented in the direction of workpiece 26 for capturing an image of surface 28. Camera system 32 further includes a processing device 40 in communication with each camera 34. Processing device 40 can include one or more field programmable gate arrays (FPGA), an application specific integrated circuits (ASIC), or microprocessors for performing image processing (e.g., cropping, scaling, etc.) as well as forming a composite image from the individual image of each camera 34. The composite image can be displayed on display 42 which can be associated with device 10. In some embodiments, each camera 34 can include a filter selective to the wavelength of laser beam 12 (FIG. 1) to allow cameras 34 to use optical information from laser beam 12 to further improve accuracy of alignment. Filters can additionally and/or alternatively filter wavelengths which otherwise might interfere with cameras 34.

In operation of device 10, one or more features 44 (FIG. 2) can be formed in workpiece 26. In one embodiment, features 44 can be metering holes. In some cases, workpiece 26 can be removed from its base for inspection, and such inspection might reveal imperfections in one or more features 44, such as an incomplete drill through the thickness of workpiece 26. In such case, the one or more features 44 can be considered incomplete and/or partially-formed features 44. Workpiece 26 can be remounted to its base for redrilling, however, it can be challenging to align nozzle 20 and aperture 36 to particularly small features 44, such as a metering hole, using just touch probe 30 and/or a single camera 34 proximate nozzle 20. Further, surface obstructions 46, such as a boss or other objected projecting away from outer surface 28 can interfere with the translation of head assembly 22 when attempting such an alignment. Camera system 32 with its multiple cameras 34 and composite imaging capabilities allow, according to the present invention, for a more precise alignment of aperture 36, and thereby cylindrical waterjet 24, with feature 44 for further drilling. Camera system 32 can additionally and/or alternatively be used for positioning of nozzle 20 during the initial drilling operation to establish the starting point of the WCS. In some cases, a small amount of material can be removed from outer surface 28 by briefly pulsing of cylindrical waterjet 24 prior to drilling/redrilling. This can create a visibly high-contrast region with which to confirm proper alignment.

The disclosed waterjet guided laser device can be used to form features in CMC components for use in aerospace, maritime, or industrial equipment, to name a few, non-limiting examples.

## Claims

1. A device (10) for forming a feature (44) in a workpiece (26), the device (10) comprising:
a waterjet guided laser device (10) translatable relative to the workpiece (26), the waterjet guided laser device (10) comprising:
a head assembly (22) comprising:
a nozzle (20) comprising an aperture (36) for ejecting a waterjet (24) with an internal laser beam (12);
**characterised in that** the head assembly (22) further comprises a camera system (32) comprising a plurality of cameras (34) disposed about the nozzle (20), wherein each of the plurality of cameras (34) is configured to capture a corresponding plurality of images of a workpiece (26), and the camera system (32) further comprises a processing device (40) for generating a composite image from the plurality of images.

2. The device (10) of claim 1, wherein the head assembly (22) further comprises: a retractable touch probe (30).

3. The device (10) of claim 1 or 2, wherein the camera system (32) comprises two cameras to ten cameras (34).

4. The device (10) of claim 3, wherein the camera system (32) comprises four cameras to eight cameras (34).

5. The device (10) of any preceding claim, and further comprising: a display (42) for displaying the composite image.

6. A method of forming a feature (44) in a workpiece (26), the method being **characterised by** the following:
orienting a waterjet guided laser device (10) about the workpiece (26) by:
capturing a plurality of images of the workpiece (26) with a corresponding plurality of cameras (34);
generating a composite image from the plurality of images; and
aligning a nozzle (20) of the waterjet guided laser device (10) to the workpiece (26) based on the composite image;
ejecting a waterjet (24) from an aperture (36) of the nozzle (20); and
impinging the waterjet (24) against the workpiece (26) causing a corresponding removal of material therefrom.

7. The method of claim 6, wherein each of the plurality of cameras (34) is disposed about the nozzle (20).

8. The method of claim 6 or 7, and further comprising: positioning the waterjet guided laser device (10) such that the plurality of cameras (34) are offset a distance (L1) from the workpiece (26).

9. The method of claim 8, wherein the distance (L1) ranges from 0.5 in (12.7mm) to 1.5 in (38.1mm).

10. The method of any of claims 6 to 9, wherein the plurality of cameras (34) comprises two cameras to ten cameras (34),

11. The method of claim 10, wherein the plurality of cameras (34) comprises four cameras to eight cameras (34).

12. The method of any of claims 6 to 11, and further comprising: displaying the composite image on a display (42).

13. The method of any of claims 6 to 12, wherein a processing device (40) generates the composite image.

14. The method of any of claims 6 to 13, wherein the step of impinging the waterjet (24) against the workpiece (26) comprises impinging the waterjet (24) against a partially formed feature (44) in the workpiece (26).

15. The device (10) or method of any preceding claim, wherein the aperture (36) has a diameter (D1) ranging from 50 microns to 100 microns,
wherein, optionally, the diameter (D1) is 70 microns.

## Patentansprüche

1. Vorrichtung (10) zum Bilden eines Merkmals (44) in einem Werkstück (26), wobei die Vorrichtung (10) umfasst:
eine wasserstrahlgeführte Laservorrichtung (10), die relativ zu dem Werkstück (26) verschiebbar ist, wobei die wasserstrahlgeführte Laservorrichtung (10) umfasst:
eine Kopfbaugruppe (22), umfassend:
eine Düse (20), die eine Öffnung (36) zum Ausstoßen eines Wasserstrahls (24) mit einem internen Laserstrahl (12) umfasst; **dadurch gekennzeichnet, dass** die Kopfbaugruppe (22) ferner ein Kamerasystem (32) umfasst, das eine Vielzahl von Kameras (34) umfasst, die um die Düse (20) herum angeordnet sind, wobei jede der Vielzahl von Kameras (34) konfiguriert ist, um eine entsprechende Vielzahl von Bildern eines Werkstücks (26) aufzunehmen, und das Kamerasystem (32) ferner eine Verarbeitungsvorrichtung (40) zum Erzeugen eines zusammengesetzten Bildes aus der Vielzahl von Bildern umfasst.

2. Vorrichtung (10) nach Anspruch 1, wobei die Kopfbaugruppe (22) ferner umfasst: einen einziehbaren Messtaster (30).

3. Vorrichtung (10) nach Anspruch 1 oder 2, wobei das Kamerasystem (32) zwei Kameras bis zehn Kameras (34) umfasst.

4. Vorrichtung (10) nach Anspruch 3, wobei das Kamerasystem (32) vier Kameras bis acht Kameras (34) umfasst.

5. Vorrichtung (10) nach einem der vorhergehenden Ansprüche, und ferner umfassend: eine Anzeige (42) zum Anzeigen des zusammengesetzten Bildes.

6. Verfahren zum Bilden eines Merkmals (44) in einem Werkstück (26), wobei das Verfahren durch Folgendes gekennzeichnet ist:
Ausrichten einer wasserstrahlgeführten Laservorrichtung (10) an dem Werkstück (26) durch:
Aufnehmen einer Vielzahl von Bildern des Werkstücks (26) mit einer entsprechenden Vielzahl von Kameras (34);
Erzeugen eines zusammengesetzten Bildes aus der Vielzahl von Bildern; und
Ausrichten einer Düse (20) der wasserstrahlgeführten Laservorrichtung (10) auf das Werkstück (26) basierend auf dem zusammengesetzten Bild;
Ausstoßen eines Wasserstrahls (24) aus einer Öffnung (36) der Düse (20); und
Auftreffenlassen des Wasserstrahls (24) auf das Werkstück (26), was einen entsprechenden Materialabtrag davon bewirkt.

7. Verfahren nach Anspruch 6, wobei jede der Vielzahl von Kameras (34) um die Düse (20) herum angeordnet ist.

8. Verfahren nach Anspruch 6 oder 7, und ferner umfassend: Positionieren der wasserstrahlgeführten Laservorrichtung (10) derart, dass die Vielzahl von Kameras (34) um einen Abstand (L1) von dem Werkstück (26) versetzt ist.

9. Verfahren nach Anspruch 8, wobei der Abstand (L1) in einem Bereich von 0,5 Zoll (12,7 mm) bis 1,5 Zoll (38,1 mm) liegt.

10. Verfahren nach einem der Ansprüche 6 bis 9, wobei die Vielzahl von Kameras (34) zwei Kameras bis zehn Kameras (34) umfasst,

11. Verfahren nach Anspruch 10, wobei die Vielzahl von Kameras (34) vier Kameras bis acht Kameras (34) umfasst.

12. Verfahren nach einem der Ansprüche 6 bis 11, und ferner umfassend: Anzeigen des zusammengesetzten Bildes auf einer Anzeige (42).

13. Verfahren nach einem der Ansprüche 6 bis 12, wobei eine Verarbeitungsvorrichtung (40) das zusammengesetzte Bild erzeugt.

14. Verfahren nach einem der Ansprüche 6 bis 13, wobei der Schritt des Auftreffenlassens des Wasserstrahls (24) auf das Werkstück (26) das Auftreffenlassen des Wasserstrahls (24) auf ein teilweise gebildetes Merkmal (44) in dem Werkstück (26) umfasst.

15. Vorrichtung (10) oder Verfahren nach einem der vorhergehenden Ansprüche, wobei die Öffnung (36) einen Durchmesser (D1) in einem Bereich von 50 Mikrometern bis 100 Mikrometern aufweist,
wobei, optional, der Durchmesser (D1) 70 Mikrometer beträgt.

## Revendications

1. Dispositif (10) pour former une caractéristique (44) dans une pièce (26), le dispositif (10) comprenant :
un dispositif laser guidé par jet d'eau (10) déplaçable par rapport à la pièce (26), le dispositif laser guidé par jet d'eau (10) comprenant :
un ensemble de tête (22) comprenant :
une buse (20) comprenant une ouverture (36) pour éjecter un jet d'eau (24) avec un faisceau laser interne (12) ;
**caractérisé en ce que** l'ensemble de tête (22) comprend en outre un système de caméra (32) comprenant une pluralité de caméras (34) disposées autour de la buse (20), dans lequel chacune de la pluralité de caméras (34) est configurée pour capturer une pluralité correspondante d'images d'une pièce (26), et le système de caméra (32) comprend en outre un dispositif de traitement (40) pour générer une image composite à partir de la pluralité d'images.

2. Dispositif (10) selon la revendication 1, dans lequel l'ensemble de tête (22) comprend en outre : une sonde tactile rétractable (30).

3. Dispositif (10) selon la revendication 1 ou 2, dans lequel le système de caméra (32) comprend de deux à dix caméras (34).

4. Dispositif (10) selon la revendication 3, dans lequel le système de caméra (32) comprend de quatre à huit caméras (34).

5. Dispositif (10) selon une quelconque revendication précédente, et comprenant en outre : un écran (42) pour afficher l'image composite.

6. Procédé de formation d'une caractéristique (44) dans une pièce (26), le procédé étant **caractérisé par** les opérations suivantes :
l'orientation d'un dispositif laser guidé par jet d'eau (10) autour de la pièce (26) en :
capturant une pluralité d'images de la pièce (26) avec une pluralité correspondante de caméras (34) ;
générant une image composite à partir de la pluralité d'images ; et
alignant une buse (20) du dispositif laser guidé par jet d'eau (10) sur la pièce (26) sur la base de l'image composite ; l'éjection d'un jet d'eau (24) par une ouverture (36) de la buse (20) ; et
l'impact du jet d'eau (24) contre la pièce (26) provoquant un enlèvement de matière correspondant de celle-ci.

7. Procédé selon la revendication 6, dans lequel chacune de la pluralité de caméras (34) est disposée autour de la buse (20).

8. Procédé selon la revendication 6 ou 7, comprenant en outre : le positionnement du dispositif laser guidé par jet d'eau (10) de sorte que la pluralité de caméras (34) soient décalées d'une distance (L1) par rapport à la pièce (26).

9. Procédé selon la revendication 8, dans lequel la distance (L1) varie de 0,5 po (12,7 mm) à 1,5 po (38,1 mm).

10. Procédé selon l'une quelconque des revendications 6 à 9, dans lequel la pluralité de caméras (34) comprend de deux caméras à dix caméras (34),

11. Procédé selon la revendication 10, dans lequel la pluralité de caméras (34) comprend de quatre à huit caméras (34).

12. Procédé selon l'une quelconque des revendications 6 à 11, et comprenant en outre : l'affichage de l'image composite sur un écran (42).

13. Procédé selon l'une quelconque des revendications 6 à 12, dans lequel un dispositif de traitement (40) génère l'image composite.

14. Procédé selon l'une quelconque des revendications 6 à 13, dans lequel l'étape d'impact du jet d'eau (24) contre la pièce (26) comprend l'impact du jet d'eau (24) contre une caractéristique partiellement formée (44) dans la pièce (26).

15. Dispositif (10) ou procédé selon une quelconque revendication précédente, dans lequel l'ouverture (36) a un diamètre (D1) compris entre 50 microns et 100 microns,
dans lequel, éventuellement, le diamètre (D1) est de 70 microns.
